# FASCICULE DE BREVET EUROPEEN

(11) **EP 0 499 557 B1**
(45) Date de publication et mention de la délivrance du brevet: **27.04.1994**
(21) Numéro de dépôt: 92440014.6
(22) Date de dépôt: 07.02.1992
(51) Int. Cl.: F23D 14/36, F23D 14/30

(54) **Brûleur compact en fonte du type à prémélange total**
Kompakter gusseiserner Brenner vom total vormischenden Typ
Compact cast iron burner of the total premix type

(30) Priorité: 07.02.1991 FR 9101573
(43) Date de publication de la demande: 19.08.1992
(73) Titulaire: DE DIETRICH THERMIQUE, F-67110 Niederbronn-les-Bains (FR)
(72) Inventeur: Fuhlhaber, Michel, F-67110 Reichshoffen (FR); Weitz, Philippe, F-67110 Reichshoffen (FR); Paradis, Marcel, F-67580 Mertzwiller (FR)
(74) Mandataire: Metz, Paul

(56) Documents cités:
- EP-A- 0 255 472

## Description

La présente invention se rapporte à un brûleur compact en fonte moulée du type à prémélange total pour chaudières sectionnables en fonte.

Les brûleurs à prémélange partiel sont connus depuis longtemps et employés de façon classique notamment sur les chaudières à gaz à brûleurs atmosphériques.

Il s'agit de mélanger l'air comburant au gaz inflammable avant la formation de la flamme. L'admission de l'air s'effectue par une entrée latérale périphérique. Une ouverture annexe obturable progressivement permet le réglage fin de la combustion et de la flamme.

Bien que présentant un bon rendement, ces brûleurs comportent divers inconvénients :
. ils sont limités en rendement ;
. réglage délicat d'une parfaite combustion ;
. ils ne présentent pas toute la souplesse d'utilisation souhaitée.

On connaît également les brûleurs à prémélange total dans lesquels on prépare le mélange gazeux inflammable dans un volume attenant à la chambre de combustion.

Ces brûleurs ne sont actuellement montés que sur des chaudières dites murales de faible puissance, en raison du risque représenté par la préparation du mélange dans une enceinte intermédiaire voisine de la chambre de combustion.

Les réalisations connues concernent des chaudières équipées d'un brûleur formé d'un ventilateur à deux entrées, l'une pour le gaz et l'autre pour l'air comburant. Dans ce ventilateur se forme le mélange gazeux inflammable qui est soufflé dans une chambre intermédiaire précédant une surface de diffusion de la flamme.

Le mélange air-gaz s'effectue à l'intérieur du ventilateur au moyen de la turbine qui, par son effet de brassage, assure une homogénéisation suffisante des deux composants gazeux, air comburant et gaz combustible. Ce mélange est soufflé par le ventilateur devant la surface de diffusion de la flamme.

En raison des risques de fuite et d'explosion, le ventilateur doit présenter, par construction, une isolation renforcée et une étanchéité suffisante.

Par ailleurs, le moteur électrique utilisé pour entraîner la turbine doit être de type antidéflagrant.

L'ensemble de ces renforcements et de ces précautions se traduit par un surcoût sensible du brûleur.

Par ailleurs, la réalisation en tôle peu épaisse des différentes pièces du brûleur et de son interface apporte un caractère de légèreté et de manque de rigidité mécanique devant le risque représenté.

Le brûleur décrit dans le brevet européen n° 0255472 au nom de la société VAILLANT présente un canal de formation du mélange air-gaz à contre-courant.

Dans ce canal transite un flux d'air généré par un ventilateur. Le gaz y est injecté à mi-longueur devant une grille.

Le mélange parvient après un trajet coudé à une chambre de détente comportant sur sa paroi frontale la surface de diffusion de la flamme.

Ce brûleur est constitué de nombreuses pièces en tôle et présente une forme générale circulaire qui le condamne à être monté sur des chaudières adaptées.

Sa fabrication non aisée et son manque d'universalité en font un brûleur spécifique et cher.

Par ailleurs, le mélange air-gaz effectué latéralement à la chambre de détente et loin de celle-ci n'apporte pas toutes les qualités et performances auxquelles on peut s'attendre de la part de ce genre de brûleur.

Le brûleur compact en fonte selon la présente invention a pour but de remédier à l'ensemble de ces inconvénients.

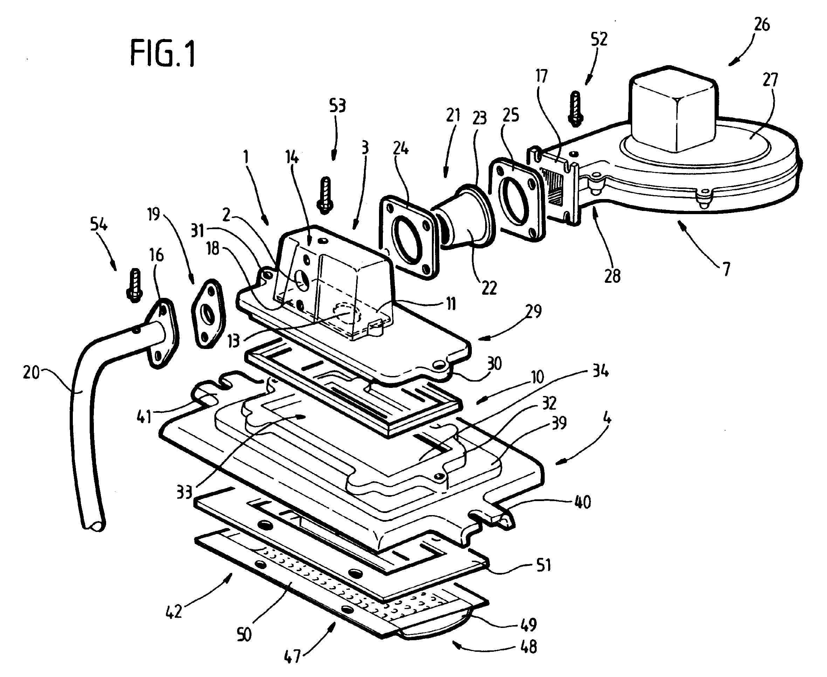

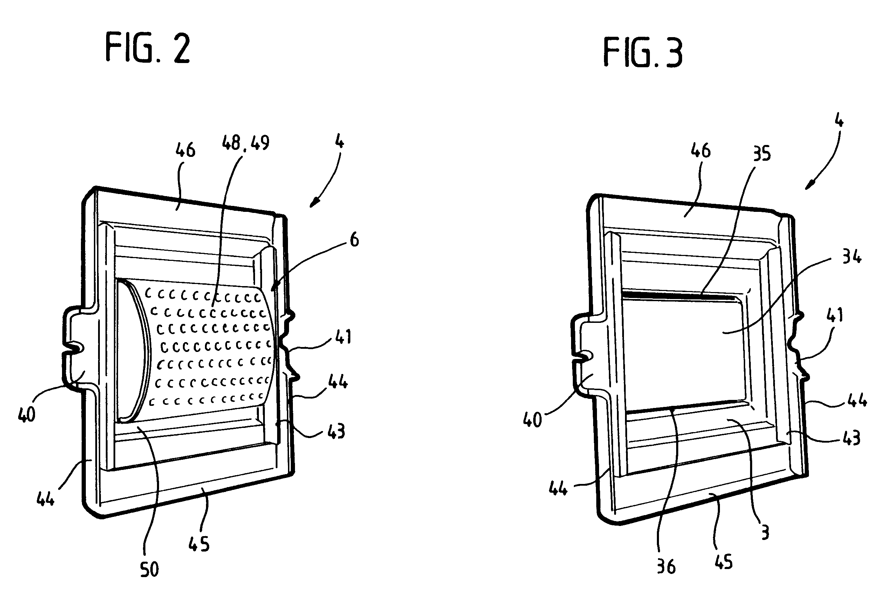

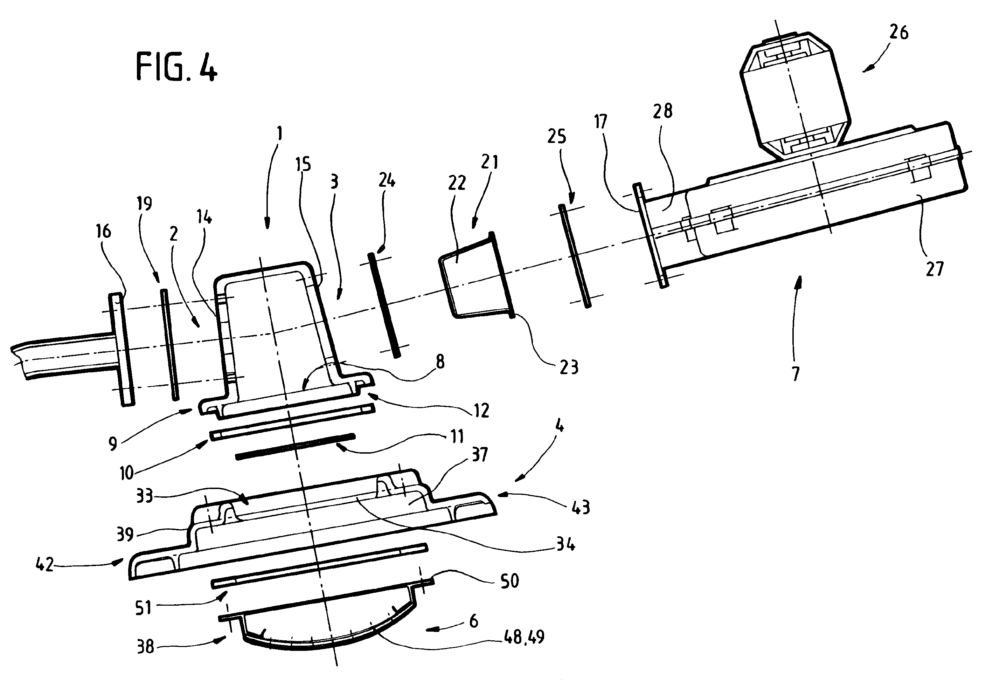

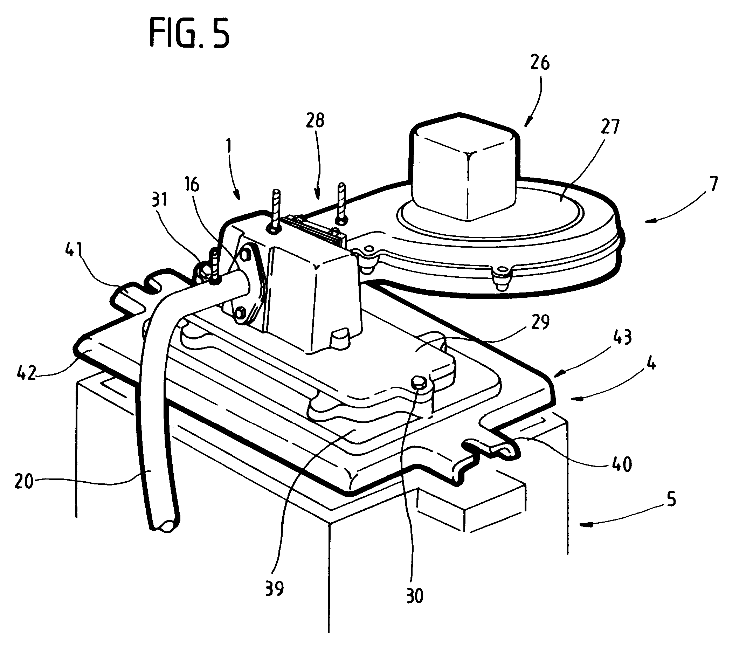

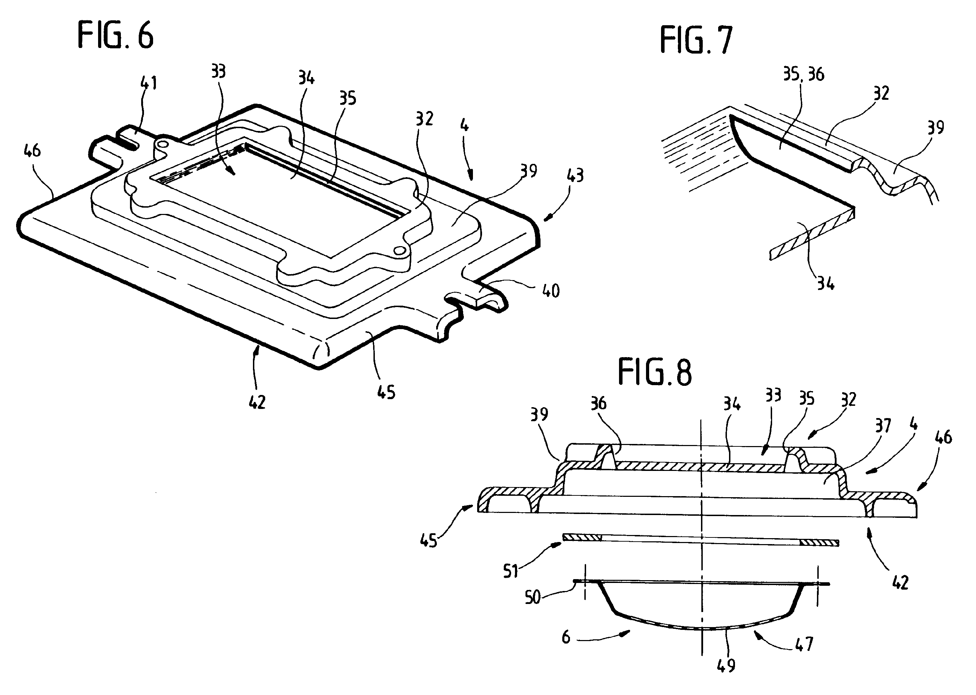

On comprendra mieux l'invention à l'aide de la description détaillée effectuée ci-après en référence aux dessins annexés dans lesquels :
. la figure 1 est une vue en perspective dite en éclaté du brûleur selon l'invention ;
. la figure 2 est une vue en perspective de dessous du brûleur équipé de la surface de diffusion des flammes ;
. la figure 3 est une vue en perspective de dessous de la plaque-support de brûleur sans la surface de diffusion des flammes ;
. la figure 4 est la coupe longitudinale en éclaté du brûleur selon l'invention ;
. la figure 5 est une vue en perspective simplifiée du brûleur monté sur une chaudière ;
. la figure 6 est une vue en perspective de la partie supérieure de la plaque-support de brûleur ;
. la figure 7 est une vue agrandie d'une des fentes de passage du mélange sur la plaque-support de brûleur ;
. la figure 8 est une vue en coupe transversale de la plaque-support de brûleur correspondant à la figure 6.

Selon l'invention, toutes les pièces constitutives du brûleur sont monobloc, réalisées en fonte moulée et conformées de façon à permettre l'utilisation de joints plats d'étanchéité entre toutes les différentes pièces constitutives et rendre le brûleur plus facilement démontable.

Le brûleur, selon le mode de réalisation représenté sur les figures, se compose principalement des éléments suivants :
. une chambre monobloc de prémélange total 1 formant une enceinte de forme quasi cubique mais légèrement pyramidale qui présente deux orifices latéraux disposés en regard constituant une entrée de gaz 2 et une entrée d'air 3 ;
. un support de brûleur sous la forme d'une plaque monobloc appelée ci-après plaque-support de brûleur 4, obturant la chambre de combustion d'une chaudière 5 sur laquelle elle est montée et constituant une interface mécanique monobloc entre la chambre de prémélange total 1 et la chaudière 5. Cette plaque-support 4 s'adapte parfaitement sur la partie supérieure de la chaudière et constitue la plaque de fermeture de sa chambre de combustion ;
. une surface de combustion 6 sur laquelle se forme et se développe le tapis de flammes ou nappe de combustion ;
. un bloc centrifuge aéraulique 7 à sortie latérale de soufflage pénétrant dans la chambre de prémélange total.

On décrira maintenant en détail chacun des éléments composant le brûleur selon l'invention.

La chambre monobloc de prémélange total 1 réalisée en fonte moulée présente une forme générale en tronc de pyramide à section transversale sensiblement en forme de "U" légèrement évasée vers une ouverture inférieure tournée vers la chaudière. Cette ouverture, formée dans la face inférieure du corps de la chambre ou dans une plaque rapportée, constitue une sortie 8 pour le mélange gazeux.

On prévoit, sur toute la périphérie de la face inférieure, un épaulement périmétrique 9 en saillie se terminant par une base à profil arrondi servant d'une part à la mise en place et à la fixation de la chambre de prémélange sur la plaque-support 4 de brûleur décrite en détail ci-après, et d'autre part à recevoir un joint plat 10 conférant l'étanchéité nécessaire entre la chambre de prémélange 1 et la plaque-support 4 de brûleur.

Selon la version préférée, l'obturation inférieure de la chambre est une plaque appelée diaphragme de sortie 11, qui vient s'appliquer contre la face fonctionnelle de l'épaulement périmétrique 9 et s'y trouve maintenu par une nervure périphérique en saillie 12 prévue perpendiculairement à la face fonctionnelle de cet épaulement de sortie. Ce diaphragme de sortie 11 comporte une ouverture décentrée 13 qui constitue l'orifice de sortie pour le mélange gazeux air-gaz (figure 1).

Le corps de la chambre de prémélange total 1 présente deux faces latérales opposées 14 et 15 comportant chacune au moins une zone plane au travers de laquelle sont obtenues les ouvertures correspondant aux entrées 2 et 3 du gaz et de l'air et sur lesquelles on pourra fixer des brides 16 ou raccords plans 17 avec interposition de joints plats.

Plus particulièrement une des faces latérales 14, à gauche sur les figures 1 et 4, comporte une ouverture circulaire constituant l'orifice de l'entrée 2 de gaz et une face plane de fixation 18 entourant cette ouverture sur laquelle vient porter un joint d'étanchéité au gaz 19, et une bride annulaire telle que 16 permettant de raccorder une conduite 20 d'alimentation en gaz, l'ensemble étant maintenu par une pluralité d'éléments de fixation, boulons ou autres.

La face latérale, située à droite sur les figures 1 et 4, comporte une ouverture circulaire constituant l'entrée d'air 3, apte à recevoir un injecteur d'air 21 en forme de buse cylindro-conique 22 à rebord périphérique de maintien 23, buse destinée à entrer complètement dans la chambre de prémélange, et dont le rebord périphérique de maintien 23 vient buter contre la zone plane de la face extérieure latérale de la chambre de prémélange par l'intermédiaire d'un joint plat d'étanchéité 24 complété par un deuxième joint 25 et d'une pluralité de boulons de fixation.

Le fond du corps de la chambre de prémélange total est tourné vers le haut, ses faces obscures avant et arrière peuvent être planes ou bombées selon les facilités de fabrication.

On décrira ci-après le bloc aéraulique 7. Il comporte un moteur 26 entraînant une turbine centrifuge 27 placée dans un corps profilé appelé volute à ouverture latérale de sortie 28 de l'air soufflé.

La sortie d'air soufflé est de dimensions et de forme appropriées à celles de l'entrée de l'injecteur et de l'entrée d'air dans la chambre de prémélange. De préférence, les mêmes boulons réalisent l'assemblage de la chambre de prémélange, de l'injecteur d'air, de la sortie d'air du bloc aéraulique 7 et on prévoit les deux joints plats d'étanchéité 24 et 25 de part et d'autre du rebord de maintien 23 de l'injecteur d'air 21 pour assurer le maintien et l'étanchéité de la liaison.

Par ailleurs on note que, les deux entrées se faisant face, leur plan vertical de symétrie est situé dans le plan de symétrie vertical transversal du corps de la chambre de prémélange ou plan de coupe de la figure 4.

L'orifice de sortie 13 du mélange air-gaz prévu dans le diaphragme 11 est, comme indiqué précédemment, décalé par exemple vers l'avant par rapport à ce plan de symétrie dans le but d'assurer un mélange suffisant des deux composants gazeux et d'éviter le court-circuit entre l'une ou l'autre entrée et la sortie (figure 1).

La chambre de prémélange repose sur une base 29 pourvue de deux extrémités de fixation 30 et 31.

On décrira ci-après la plaque-support 4 de brûleur. Il s'agit d'une pièce monobloc en fonte en forme de plaque à trois niveaux fonctionnels tous venus bruts de fonderie. La forme et les dimensions de cette plaque-support sont telles qu'elle couvre entièrement la partie supérieure du corps de la chaudière et ferme en totalité la face supérieure de la chambre de combustion de la chaudière comme on peut le voir sur la figure 5.

En examinant la plaque-support 4 de brûleur sur les figures 1, 2, 3 et 6, on distingue un premier bossage 32 délimitant une gorge destinée à recevoir et à comprimer le joint plat d'étanchéité 10 de sortie de la chambre de prémélange, entourant entièrement l'ouverture d'une chambre intermédiaire 33 de mélange à chicanes fermée sur sa face supérieure par le diaphragme de sortie 11 de la chambre de prémélange 1 et obturée par une face inférieure 34, monobloc avec le corps de la plaque-support 4. Le mélange gazeux s'échappe par deux fentes longitudinales 35 et 36 s'étendant entièrement sur chacune des faces latérales longitudinales de cette chambre intermédiaire 33 de mélange, formant ainsi deux chicanes en regard obligeant le gaz à se propager sur la périphérie en vue d'une meilleure répartition.

On distingue ensuite une chambre tampon ou chambre de répartition 37 fermée sur sa face supérieure par la face inférieure 34 de la chambre intermédiaire 33 de mélange à chicanes et sur sa face inférieure par le corps concave d'un module de diffusion 38 qui sera décrit plus loin en détail.

Latéralement, cette chambre de répartition 37 est délimitée par un bossage périmétrique 39 venant également brut de fonderie de façon que la longueur et la largeur de cette chambre soient nettement supérieures à celles de la chambre intermédiaire à chicanes. On prévoit extérieurement au bossage 39 des oreilles de fixation 40 et 41 pour l'assemblage avec la plaque-support avec interposition d'un joint plat d'étanchéité.

On distingue ensuite un volume de combustion 42, ouvert vers le bas et qui sera délimité par la partie supérieure de la chambre de combustion du corps de chauffe de la chaudière recevant le brûleur. Le volume de combustion est bordé longitudinalement, d'un côté par une nervure périphérique 43 en saillie vers le bas sur les figures, et de l'autre par un rebord périmétrique formé latéralement, de chaque côté, par deux rebords de fixation identiques 44 incurvés vers le bas, interrompus chacun en partie médiane par un décrochement d'appui pour un élément de fixation et par un rebord incurvé 45 et un rebord plat 46.

L'ensemble représentant la conformation périmétrique de sous-face de la plaque-support est monobloc avec elle. Cette conformation permet, avec un corps de chauffe adapté, d'assurer une jonction simple avec la chaudière avec étanchéité par joint plan.

Le module de diffusion 38 présente un corps 47 en saillie à face inférieure bombée concave 48 équipée d'une grille 49 ou d'un matériau poreux perméable au gaz. Le corps du module de diffusion fait saillie dans le volume de combustion selon une disposition longitudinale, dont tout le bord supérieur se prolonge latéralement par un rebord périmétrique plan de fixation 50 venant s'appuyer sur la partie en regard de la plaque-support 4 de brûleur avec interposition d'un joint plan d'étanchéité 51.

La forme et la matière de la face bombée concave sont déterminées de façon que, d'une part, le mélange air-gaz brûle en formant une nappe de combustion homogène et que, d'autre part, le rayonnement soit dirigé radialement à partir de la surface de combustion vers tous les points du fond de la chambre de combustion sans laisser de points dits "froids" en périphérie et/ou dans les angles améliorant ainsi l'échange de chaleur avec les éléments du corps de l'échangeur de la chaudière.

La face intérieure de la surface de diffusion du module de diffusion forme la face de fermeture de la chambre de répartition, la face extérieure constituant la surface de diffusion sur laquelle se forme le tapis de flammes ou nappe de combustion.

La longueur de la surface de diffusion est suffisamment importante pour occuper la majeure partie de la chambre de combustion tant en largeur qu'en longueur.

Comme on peut le remarquer sur la figure 1, il existe des embouts de prise de pression à trois niveaux. Ainsi, on distingue un embout 52 de sortie de ventilateur, un embout 53 de chambre de combustion, un embout 54 d'arrivée de gaz.

Selon le mode de sécurité employé, on mesure à l'aide d'un montage avec capteurs appropriés la différence de pression entre le bloc aéraulique et la chambre de prémélange.

Sa valeur voisine de zéro ou nulle traduit une défaillance ou un mauvais fonctionnement du ventilateur.

## Revendications

1. Brûleur compact en fonte du type permettant le prémélange total dès l'injection de l'air et du gaz pour chaudière sectionnable en fonte, caractérisé en ce qu'il comprend :
. une chambre de prémélange total (1) monobloc entièrement venue de fonderie, de forme générale en tronc de pyramide, fermée en partie supérieure et à ouverture inférieure constituant une sortie pour le mélange gazeux de combustion et à deux entrées, l'une (2) pour le gaz et l'autre (3) pour l'air ;
. une base plane (29) pourvue de deux extrémités (30) et (31) de fixation, sur laquelle la chambre de prémélange total repose ;
. un bloc aéraulique (7) soufflant alimentant en air légèrement comprimé la chambre de prémélange total (1) ;
. une arrivée de gaz dans la chambre de prémélange total (1) ;
. une plaque-support (4) de brûleur monobloc entièrement venue de fonderie, disposée entre la chambre (1) et la surface de flamme, cette plaque présentant trois niveaux fonctionnels couvrant la totalité de la partie supérieure de la chambre de combustion pour servir de support et d'interface entre la chambre de prémélange (1) et le bloc des échangeurs du corps de chauffe sectionnable de la chaudière en fonte (5) ;
. un module de diffusion (38) de flamme interchangeable de longueur voisine de celle de la plaque-support (4) sur la face avant duquel se forme la flamme, module solidarisé à la plaque-support (4) de brûleur en sous-face sur le côté opposé à celui recevant la chambre de prémélange total (1) ;
. un joint plat d'étanchéité intercalé entre chaque pièce détachable et sa voisine formant le brûleur.

2. Brûleur selon la revendication 1, caractérisé en ce que l'entrée (2) d'injection du gaz et celle (3) de l'air dans la chambre de prémélange total (1) sont latérales.

3. Brûleur selon les revendications 1 et 2, caractérisé en ce que les deux entrées latérales (2) et (3) de la chambre de prémélange total (1) sont disposées en regard, et en ce que ladite chambre est obturée sur sa face inférieure par un diaphragme (11) comportant un orifice (13) pour la sortie du mélange air-gaz.

4. Brûleur selon la revendication 3, caractérisé en ce que l'orifice de sortie (13) du mélange air-gaz sur le diaphragme (11) est décalé par rapport au plan de symétrie.

5. Brûleur selon les revendications précédentes, caractérisé en ce que le module de diffusion (38) de flamme présente une face bombée concave (48) perméable au gaz sur laquelle se forme et se développe la flamme, face entourée d'un rebord périmétrique (50) de fixation sur la plaque-support (4) de brûleur.

6. Brûleur selon l'une quelconque des revendications précédentes, caractérisé en ce que la plaque-support (4) de brûleur comporte successivement du haut vers le bas une chambre intermédiaire (33) de mélange recevant le mélange air-gaz sortant de la chambre de prémélange total (1), une chambre de répartition (37) et un volume de combustion (42) délimité par le corps du module de diffusion (38) terminé vers l'extérieur par la face bombée concave (48) constituant la surface de formation et de développement de la flamme.

7. Brûleur selon l'une quelconque des revendications 3 à 6 caractérisé en ce que la chambre intermédiaire (33) de mélange est fermée sur sa face supérieure par la base (29) et le diaphragme (11) et sur sa face inférieure par une plaque d'obturation (34) monobloc avec la plaque-support (4) de brûleur et dont les faces latérales longitudinales sont ouvertes sous la forme de fentes (35) et (36) pour former des chicanes par lesquelles le mélange air-gaz s'échappe le long de chaque côté vers la chambre de répartition (37).

8. Brûleur selon la revendication 7, caractérisé en ce que la partie couverte de la plaque-support (4) de brûleur est la partie supérieure du corps de chauffe d'une chaudière.

9. Brûleur selon l'une quelconque des revendications précédentes, caractérisé en ce que la chambre de répartition (37) est fermée d'une part sur sa face supérieure par la plaque de fond (34) de la chambre intermédiaire (33) de mélange à chicanes et d'autre part sur sa face inférieure par la surface de flamme du module de diffusion (38).

10. Brûleur selon l'une des revendications précédentes, caractérisé en ce que le bloc aéraulique (7) est une turbine qui comporte une sortie latérale présentant un injecteur (21) pénétrant complètement dans la chambre de prémélange total (1).

11. Brûleur selon la revendication 9, caractérisé en ce que l'injecteur (21) affecte la forme d'une buse cylindro-conique (22).

## Patentansprüche

1. Kompakter Brenner aus Gußeisen zum vollständigen Vormischen ab der Zuführung der Luft und des Gases für einen Gliederkessel aus Gußeisen, gekennzeichnet durch
- eine vollständig aus Guß einstückig gefertigte, im wesentlichen pyramidenstumpfförmige Kammer zum vollständigen Vormischen (1), die im oberen Bereich abgeschlossen und mit einer einen Auslaß für das Brenngasgemisch bildenden unteren Öffnung und mit zwei Einlässen, der eine (2) für das Gas und der andere (3) für die Luft, versehen ist;
- eine ebene Zwischenbasis (29) mit zwei Befestigungsenden (30, 31), auf der die Kammer zum vollständigen Vormischen ruht;
- einen Gebläseblock (7) zum Zuführen von leicht komprimierter Luft in die Kammer zum vollständigen Vormischen (1);
- einen Gaseinlaß in der Kammer zum vollständigen Vormischen (1);
- eine völlig aus Guß bestehende, einstückige BrennerTragplatte (4) zwischen der Kammer (1) und der Flammfront, die drei funktionelle Ebenen aufweist, den gesamten oberen Teil der Verbrennungskammer abdeckt und als Träger und Zwischenlage zwischen der Kammer (1) zum Vormischen und dem Austauschblock des Gliederheizkörpers des Gußeisen-Kessels (5) dient;
- ein austauschbarer Flammendiffusionsmodul (38), dessen Länge derjenigen der Tragplatte (4) an der Seite nahekommt, an dessen Vorderseite sich die Flamme bildet, wobei das Modul mit der Tragplatte (4) des Brenners unterseitig mit der Seite verbunden ist, die derjenigen, die die Kammer (1) zum vollständigen Vormischen aufnimmt, gegenüberliegt;
- eine Flachdichtung zwischen jedem lösbaren Teil und seiner den Brenner bildenden Umgebung eingesetzt ist.

2. Brenner nach Anspruch 1, dadurch gekennzeichnet, daß der Einlaß (2) für die Gas- und derjenige (3) für die Luftzufuhr seitlich an der Kammer (1) zum vollständigen Vormischen angeordnet sind.

3. Brenner nach Anspruch 1 und 2, dadurch gekennzeichnet, daß die zwei seitlichen Einlässe (2, 3) der Kammer (1) zum vollständigen Vormischen einander gegenüber angeordnet sind und daß die Kammer auf ihrer Unterseite durch ein Diaphragma (11) verschlossen ist, das eine Öffnung (13) als Auslaß für das Luft-Gasgemisch aufweist.

4. Brenner nach Anspruch 3, dadurch gekennzeichnet, daß die Auslaßöffnung (13) für das Luft-Gasgemisch an dem Diaphragma (11) bezüglich der Symmetrieebene versetzt ist.

5. Brenner nach einem der vorangehenden Ansprüche, dadurch gekennzeichnet, daß das Flammenverdiffusionsmodul (38) eine gasdurchlässige konkav gewölbte Fläche (48) aufweist, an der sich die Flamme bildet und entwickelt, wobei die Fläche von einer perimetrischen Randeinfassung (50) zur Befestigung an der Tragplatte (4) des Brenners umschlossen ist.

6. Brenner nach einem der vorangehenden Ansprüche, dadurch gekennzeichnet, daß die Tragplatte (4) des Brenners von oben nach unten nacheinander eine Zwischenmischkammer (33) zur Aufnahme des aus der Kammer (1) zum vollständigen Vormischen austretenden Luft-Gasgemisches, eine Verteilerkammer (37) und einen Verbrennungsraum (42) aufweist, der durch das Gehäuse des Diffusionsmoduls (38) begrenzt ist, das nach außen in der konkav gewölbten Fläche (48) zur Bildung und Entwicklung der Flamme endet.

7. Brenner nach einem der Ansprüche 3 bis 6, dadurch gekennzeichnet, daß die Zwischenmischkammer (33) an ihrer Oberseite durch die Zwischenlage (29) und das Diaphragma (11) und an ihrer Unterseite durch eine mit der Tragplatte (4) des Brenners einstückig ausgebildete Verschlußplatte (34) geschlossen ist, deren Längsseitenwände mit Öffnungen in Form von Schlitzen (35, 36) versehen sind, wodurch Schikanen ausgebildet werden, durch die das Luft-Gasgemisch entlang jeder Seite zur Verteilerkammer (37) strömt.

8. Brenner nach Anspruch 7, dadurch gekennzeichnet, daß der abgedeckte Teil der Tragplatte (4) des Brenners das Oberteil des Heizkörpers des Kessels ist.

9. Brenner nach einem der vorangehenden Ansprüche, dadurch gekennzeichnet, daß die Verteilerkammer (37) einerseits an ihrer Oberseite durch die Bodenplatte (34) der Zwischenmischkammer (33) mit den Schikanen, andererseits an ihrer Unterseite an der Flammfläche des Diffusionsmoduls (38) verschlossen ist.

10. Brenner nach einem der vorangehenden Ansprüche, dadurch gekennzeichnet, daß der Gebläseblock (7) eine Turbine ist, die einen seitlichen Auslaß mit einem Injektor (21) aufweist, der in die Kammer (1) zum vollständigen Vormischen völlig eingreift.

11. Brenner nach Anspruch 9, dadurch gekennzeichnet, daß der Injektor (21) die Form einer zylindrisch-konisch ausgebildeten Düse (22) aufweist.

## Claims

1. Compact cast iron burner of the type allowing total premixing as soon as air and gas is injected for a cast iron boiler of the sectional type, characterised in that it comprises:
. a completely cast monobloc total premixing chamber (1), having the general shape of a truncated pyramid, closed at the top and comprising a lower aperture constituting an outlet for the gaseous combustion mixture, and comprising two inlets, one (2) for the gas, and the other (3) for the air;
. a flat base (29) provided with two securing ends (30) and (31), on which the total premixing chamber rests;
. an air block (7), supplying slightly compressed air to the total premixing chamber (1);
. a gas inlet into the total premixing chamber (1);
. a completely cast monobloc burner support plate (4), disposed between the chamber (1) and the flame surface, this plate having three operating levels covering the entire upper part of the combustion chamber to act as a support and an interface between the premixing chamber (1) and the exchanger block of the sectional heating body of the cast iron boiler (5);
. an interchangeable flame diffusion module (38), the length of which is similar to that of the support plate (4), and on the front face of which the flame is formed, the module being integral with the burner support plate (4) on the underside, on the side opposite that accommodating the total premixing chamber (1);
. a flat leaktight seal fitted between each detachable part and its adjacent part forming the burner.

2. Burner according to Claim 1,
characterised in that the gas injection inlet (2) and the air inlet (3) into the total premixing chamber (1) are lateral.

3. Burner according to Claims 1 and 2,
characterised in that the two lateral inlets (2) and (3) of the total premixing chamber (1) are located opposite one another, and in that the said chamber is closed on its lower face by a membrane (11) comprising an aperture (13) for the outlet of the air-gas mixture.

4. Burner according to Claim 3,
characterised in that the outlet aperture (13) of the air-gas mixture on the membrane (11) is offset in relation to the plane of symmetry.

5. Burner according to the preceding claims, characterised in that the flame diffusion module (38) has a concave curved gas-permeable surface (48), on which the flame forms and develops, the face being surrounded by a peripheral edge (50) for securing on the burner support plate (4).

6. Burner according to any one of the preceding claims, characterised in that the burner support plate (4) comprises, successively, from the top to the bottom, an intermediate mixing chamber (33) receiving the air-gas mixture leaving the total premixing chamber (1), a distribution chamber (37) and a combustion space (42) delimited by the body of the diffusion module (38), terminated on the exterior by the curved concave surface (48) constituting the flame forming and developing surface.

7. Burner according to any one of Claims 3 to 6, characterised in that the intermediate mixing chamber (33) is closed on its upper face by the base (29) and the membrane (11), and on its lower face by a sealing plate (34) which is integral with the burner support plate (4), and of which the longitudinal lateral faces are open in the form of slits (35) and (36) to form baffles, by means of which the air-gas mixture escapes along each side towards the distribution chamber (37).

8. Burner according to Claim 7,
characterised in that the covered part of the burner support plate (4) is the upper part of a boiler heating body.

9. Burner according to any one of the preceding claims, characterised in that the distribution chamber (37) is closed firstly on its upper face by the base plate (34) of the intermediate mixing chamber (33) with baffles and secondly on its lower face by the flame surface of the diffusion module (38).

10. Burner according to any one of the preceding claims, characterised in that the air block (7) is a turbine which comprises a lateral outlet having an injector (21) penetrating the total premixing chamber (1) completely.

11. Burner according to Claim 9,
characterised in that the injector (21) is in the shape of a cylindro-conical nozzle (22).
